# EUROPEAN PATENT SPECIFICATION

(11) **EP 1 846 196 B1**
(45) Date of publication and mention of the grant of the patent: **29.12.2010**
(21) Application number: 06704670.6
(22) Date of filing: 13.02.2006
(51) Int. Cl.: B25J 9/10, B25J 19/00, H02K 7/116, B25J 9/04

(54) **AN INDUSTRIAL ROBOT WITH SEVERAL AXES, WITH MULTISTAGE TRANSMISSION GEARS AND PREPARED FOR WORKING IN AN AGGRESSIVE AND LIMITED WORKING AREA**
INDUSTRIEROBOTER MIT MEHREREN ACHSEN MIT MEHRGANGGETRIEBERÄDERN UND EINGERICHTET ZUR ARBEIT IN EINEM AGGRESSIVEN UND BESCHRÄNKTEN ARBEITSBEREICH
ROBOT INDUSTRIEL A PLUSIEURS AXES, AVEC ENGRENAGES DE TRANSMISSION A ETAGES MULTIPLES, ET DESTINE A TRAVAILLER DANS UN MILIEU AGRESSIF ET REDUIT

(30) Priority: 11.02.2005 SE 0500340
(43) Date of publication of application: 24.10.2007
(73) Proprietor: ABB AB, 721 83 Västerås (SE)
(72) Inventor: LARSSON, Jan, S-724 78 Västerås (SE); JOHNSSON, Karl-Gunnar, S-723 43 Västerås (SE); OLSSON, Mats, S-722 31 Västerås (SE); TORESSON, Bo, S-731 32 Köping (SE); PERSSON, Stig, S-722 27 Västerås (SE); PAANANEN, Tommi, S-722 17 Västerås (SE)
(86) International application number: PCT/SE2006/000191
(87) International publication number: WO 2006/085819

(56) References cited:
- EP-A1- 0 658 405
- EP-A1- 0 891 842
- EP-A1- 1 457 295
- US-A- 4 698 483
- US-A- 4 904 148
- US-A- 5 293 107
- US-A- 5 357 824
- US-A- 5 881 604

## Description

### FIELD OF THE INVENTION AND BACKGROUND ART

The present invention relates to an industrial robot with a fixed base, a frame pivotally connected thereto about a first axis, a lower arm, one end of which is pivotally connected to the frame about a second axis, and an upper arm, one end of which is pivotally connected to the other end of the lower arm about a third axis.

The invention relates to industrial robots for any conceivable use, such as, for example, for welding, painting, removal of goods, etc.

The term "fixed base" is to be interpreted as being fixed on the base on which the robot rests, but the latter base may very well be movable, for example be in the form of a car running on rails. Said three axes usually extend, respectively, vertically (first), horizontally (second) and horizontally parallel to the second one, but directions completely different from these are feasible. With regard to the designation "horizontal" and "vertical" above and in the following description, reference is made to the case where the robot is standing on a horizontal base.

The number of axes is often six in such an industrial robot in order to achieve maximum freedom of movement for a gripping claw, a spray nozzle, or the like, mounted at the outer end of the upper arm via a so-called wrist. However, the invention also includes industrial robots with fewer axes, and it is quite possible for the robot to exhibit the above-mentioned three axes only.

A robot of this type comprises a drive package with a motor and a gear between the output axle of the motor for achieving rotation of the frame relative to the base about the first axis and a similar drive package for rotating the lower arm relative to the frame about the second axis. An example of a robot of this type is found in US 5,357,824. In this robot, the gears of the drive packages are compact gears.

In hitherto known robots of this kind, these drive packages are arranged adjacent to each other, which entails a relatively large extent of the robots in a horizontal direction, and the relatively large distance between said axes in the horizontal direction implies that the free area that the robot needs to be able to work without bumping into obstacles becomes large, that is, such robots must be located at a relatively long distance from each other and hence require a large floor area.

### SUMMARY OF THE INVENTION

It is the object of the present invention to provide an industrial robot of the kind described above, which improves the possibilities of reducing the floor area required for such a robot.

This object is solved by means of the invention by providing such a robot, in which the respective gearing is a multistage gear transmission with parallel gear wheel axes and one of the gear wheels of the gearing is secured to the first and second axles, respectively, and the gearing for the second axle is arranged above the gearing of the first axle and, viewed from above in the direction of the first axis, is partly covering the gearing of the first axle.

In this way, the robot may be made more compact with regard to its extent in the horizontal direction, and the first and second axles will be closer to each other in the horizontal direction, which, in a decreasing direction, influences the free area that the robot needs to move across without bumping into obstacles or other robots. In this way, both gearings may be arranged in one and the same housing. In addition, the very use of a multi-stage gear transmission at this location in a robot provides a possibility of taking measures for achieving elimination of play in the gearing and hence a higher rigidity of the robot between the robot arms connected to the drive package in question. Such an elimination of play is not possible, neither with a single-stage gear transmission, nor with a compact gear transmission. How this elimination of play can be achieved in practice is the object of one embodiment of the invention described below.

According to one embodiment of the invention, said gear wheel that is secured to the second axle is arranged externally of and passed through by the second axle and, viewed from above in the direction of the first axis, protrudes in the radial direction essentially up to the first axle, whereby the robot may be made compact and with a reduced area requirement.

According to another embodiment of the invention, said drive packages are arranged inside said frame, which is advantageous when striving to create a compact robot. The first and second axles are advantageously hollow, which enables pulling cables sealed against the exterior through these axles.

According to another embodiment of the invention, the first and second axles open out into a common space in the frame that forms both a stand part and a housing for the gearings associated with the first and second axles. In this way, said space in the frame may be simply and efficiently sealed outwardly and still be accessible through a removable housing, which constitutes another embodiment of the invention.

According to a further embodiment of the invention, also the third axle and the lower arm are hollow, and cables for controlling the movement of the robot extend from the base to the upper arm inside the base, the frame and the lower arm through said three axles in a path that is sealed relative to the exterior. This renders the robot well suited for use in aggressive environments, such as environments laden with moisture or other medium that may be detrimental to the functioning of cables and other vital parts of a robot.

It is advantageous in this context for the lower arm to comprise a housing capable of being removed for accessing the interior of the lower arm.

According to yet another embodiment of the invention, the industrial robot comprises a said drive package with a motor and a multistage gear transmission also for the third axle, and this drive package is arranged in a space in the upper arm together with a drive package with a motor and a gearing for rotating the upper arm relative to the lower arm around a fourth axle parallel to the longitudinal extent of the upper arm. In this way, said space in the upper arm is advantageously sealed relative to the exterior by a removable housing, such that these vital parts of the industrial robot are protected from the effect of the external environment but are still accessible when desired.

Thus, in said space in the upper arm, there may also advantageously be arranged motors for axles arranged at the other end of the upper arm, located opposite to the connection with the lower arm, when such axles exist.

According to still another embodiment of the invention, the robot comprises so-called client cables, extending from the interior of the base to the frame through said first axle, that is, cables specific to the intended use of the robot, such as welding wires, and not belonging to cables intended for controlling the movements of the robot. Because of the type of gearing that is used here, the continuous hole in said first axle may be provided with such a large cross section that there will be no problem passing such client cables through the axle. This also makes it possible to arrange inside said first axle a tube, extending in the direction of said axle, with a smaller outer diameter than the inner diameter of the axle, and to arrange said client cables in the tube and the cables intended for controlling the movement of the robot in the space between the tube and the inner wall of the axle to tightly separate these two types of cable. This may sometimes be important, for example for client cables in the form of welding wires, in which very strong currents may flow which may influence signals and power feed in the other cables of the robot.

According to yet a further embodiment of the invention, the industrial robot exhibits, for at least one of said gearings, means for eliminating any play in the last stage of the gearing in that said last gear wheel, secured to the respective axle, and a penultimate gear wheel meshing with said last gear wheel, exhibit wedge-like teeth in the direction of their axes of rotation and that means are arranged for spring-loaded influence of said penultimate gear wheel in the direction of said axes of rotation to mesh with said last gear wheel. This increases the precision and the evenness of the rotary motion about the axle in question, which is important when the robot is to carry out precision work. In addition, because of the wedge-like tooth shape, the elimination of play with the resultant rigidity between the robot arms in question will be maintained over time, since the teeth are worn into an increasingly better fit, and this together with the spring loading provides for very little play.

Further advantages and advantageous features of the invention will become clear from the following description and the other independent claims.

### BRIEF DESCRIPTION OF THE DRAWINGS

Embodiments of the invention, given as examples, will be described in the following with reference to the accompanying drawings, wherein:
- Figure 1: is a perspective view of an industrial robot according to one embodiment of the invention,
- Figure 2: is a very simplified view illustrating the mutu- al location of the gearings in the drive packa- ges for the first and second axles of the robot according to Figure 1,
- Figure 3: is a simplified perspective view illustrating the composition of a drive package for rotation about an axis of a robot according to Figure 1,
- Figure 4: is a simplified, partly cut-away view through the robot according to Figure 1 illustrating possible cable pulling therethrough,
- Figure 5: is a cut-away view through the base and the frame of a robot according to the invention illustrating the cable pulling through these parts of the robot, and
- Figure 6: is a view corresponding to Figure 5, illustra- ting an alternative cable pulling through the relevant parts of the robot.

### DETAILED DESCRIPTION OF EMBODIMENTS OF THE INVENTION

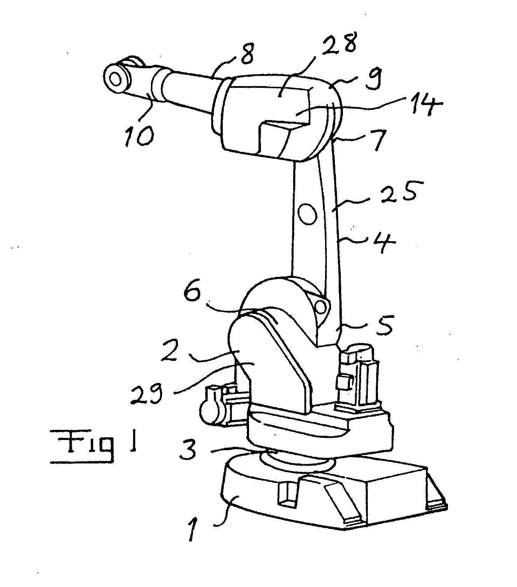

Figure 1 illustrates an industrial robot according to the invention, said robot having a fixed base 1, the outer casing of which delimits an inner tight space for cables and electronics equipment intended both for transmission of electric power to the different motors of the robot and for signal transmission. A frame 2 is rotatably connected to the base around a vertical first axis by means of a first axle 3 (the different axes are only schematically denoted in the figures). Further, one end 5 of a lower arm 4 is rotatably connected to the frame 2 about a horizontal second axis by means of a second axle 6. Inside the frame 2, drive packages are arranged comprising motor and gearing for both rotation of the frame relative to the base about the first axis and for rotation of the lower arm relative to the frame about the second axis.

At the other end 7 of the lower arm, one end 9 of an upper arm 8 is rotatably connected about a horizontal third axis that is parallel to the second axis. At the other end 10 of the upper arm, different types of equipment may be arranged; however, these are not relevant to the invention and will not therefore be described here.

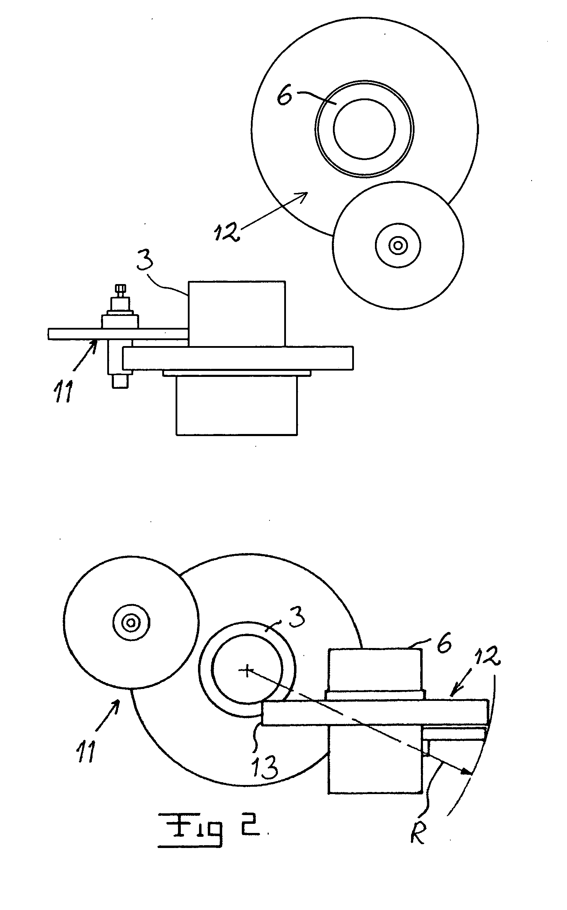

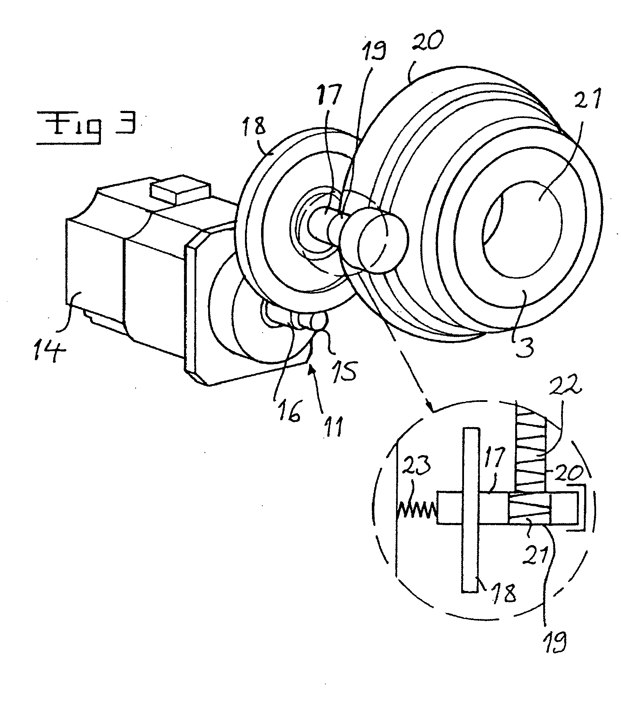

In Figure 2, the upper part schematically illustrates the gearings 11, 12 in drive packages with motor and gearing between the output shaft of the motor and the first 3 and second 6 axles, respectively, in a side view in the direction of the second axle, and the lower part illustrates a view from above in the direction of the first axle. How these drive packages with gearings are constructed will be described in more detail below with reference to Figure 3. It is clear that the gearing 12 for the second axle 6 is arranged above the gearing 11 of the first axle 3 and, viewed from above in the direction of the first axle (lower part of Fig. 2), is partly covering the gearing of the first axle, more precisely to such an extent that a last gear wheel 13 of the gearing 12, which wheel is secured to the second axle 6, projects, viewed from above in the direction of the first axle, in the radial direction essentially up to the first axle 3. In this way, the radius R, which describes the interference area of the robot relative to other robots and obstacles with regard to the frame, is relatively short, which is advantageous for the possibilities of arranging such robots in a tight manner or on small surfaces. In addition, the gearings of the two axles may be arranged in one and the same housing. The possible compact design of the frame 2, while tightly sealing the inner space of the frame with a removable housing 29, is clear from Figure 1. It is also clear that a housing 28 encloses a space in the upper arm, said space comprising, inter alia, a drive package of the kind described below for rotating the upper arm about the third axis.

Figure 3 illustrates the composition of a drive package of the type that is preferably arranged for rotation about the first, the second as well as the third axis. The drive package exhibits an electric motor 14. Between the motor 14 and the axle 3 (or any of the other axles), a gearing 11 is arranged for reduction of the speed of an output shaft 15 of the motor to a speed that is at least 50, preferably more than 100 times lower than the speed of the axle 3. The gearing comprises a first stage in the form of a smaller gear wheel 16, arranged on the output shaft 15 of the motor, meshing with a larger wheel 18 arranged on a shaft 17. The shaft 17 is arranged to be rotatable about an axis parallel to the motor shaft in bearings (not shown).

The gearing exhibits a second stage in the form of a small, so-called penultimate gear wheel 19 arranged on the shaft 17 and meshing with a large, so-called last gear wheel 20 of the gearing. The large gear wheel 20 is secured to the axle 3 which, due to the large diameter of this gear wheel, may be provided with a through-hole 21 with a relatively large cross section.

The penultimate gear wheel 19 and the last gear wheel 20 exhibit, in the direction of their axes of rotation, wedge-like teeth 21, 22, and since the shaft 17 is influenced by way of a spring 23 in the direction of its longitudinal extension, the wedge-like teeth will all the time be pressed to intimately mesh with each other to eliminate any play in this last stage of the gearing.

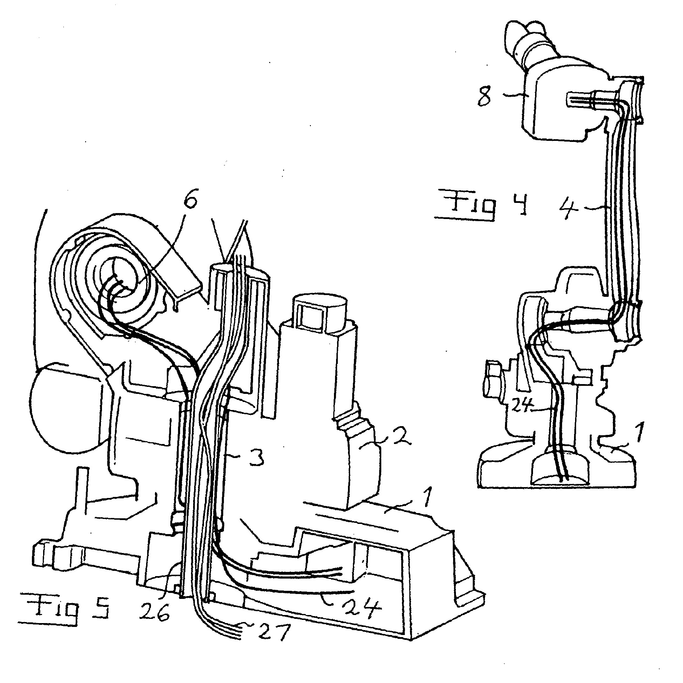

One advantage of this type of gearing is that the axle in question may be provided with a hole 21 with a large cross section without the drive package becoming bulky and still possible to place inside the stand of the robot. This provides possibilities of pulling the cables of the robot through such an axle to protect them against the impact of the environment externally of the robot. Figure 4 illustrates how this makes it possible to pull cables 24 for controlling the movements of the robot, such as for energy feed to motors and signal transmission in a path, sealed from the exterior, inside the robot from the base 1 to the upper arm 8 through the different axles. To this end, also the lower arm 4 is made hollow and sealed relative to the exterior via a removable housing 25 for accessing the interior of the lower arm. The "cables" may be of any kind, such as electric conductors, optical fibres, hoses for water and air, etc.

Figure 5 shows how a tube 26 may be arranged to extend through the first axle 3 in order to pass so-called client cables 27 therein, that is, specific cables for the intended use of the robot, such as welding wires. The tube 26 has an outer diameter that is smaller than the inner diameter of the axle 3 and the cables 24 for controlling the movements of the robot are arranged in the space between the outer wall of the tube 26 and the inner wall of the axle 3, so that these two types of cables do not influence each other.

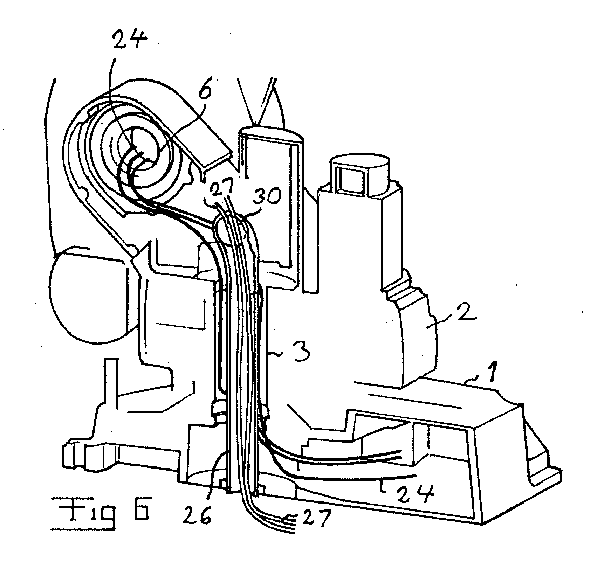

Figure 6 shows how the so-called client cables 27 at 30 are passed out sideways from the stand of the robot and instead run externally thereof and possibly back into the robot stand in the region of the third axle. In certain applications, such a cable pulling may lead to a longer service life of the cables, which may be of considerable importance from the point of view of economy.

The robot according to the invention as described above is very compact in its design and tight, especially watertight, and hence suitable for use in tough environments without expensive seals being required. It may then also be washed in a simple manner with water and/or other cleaning agents without this having a detrimental effect on the operation of the robot.

The invention is not, of course, in any way limited to the embodiments described above, but a plurality of possibilities of modifications thereof are obvious to a person skilled in the art, without this person therefore departing from the basic concept of the invention as defined in the accompanying claims.

For example, the multistage gear transmission in said drive packages could have more than two stages, for example three.

Nor is it necessary for the robot to exhibit any so-called client cables.

The mutual sequence shown in Figure 2 for the gearings of the drive packages for rotation about the first and second axis may, of course, be varied to some extent within the scope of the invention.

## Claims

1. An industrial robot with a fixed base (1), a frame (2) rotatably connected thereto about a first axis by means of a first axle (3), a lower arm (4), one end of which is rotatably connected to the frame about a second axis by means of a second axle (6), and an upper arm (8), one end of which is rotatably connected to the other end of the lower arm about a third axis by means of a third axle, wherein it comprises, both for the rotation about the first and the second axes, a drive package with a motor and a gearing between the output shaft of the motor and the first and second axles, respectively, wherein the respective gearing (11, 12) is a multistage gear transmission with parallel gear wheel axes, that one of the gear wheels (20;13) of the respective gearing is secured with respect to the first and second axles, respectively, and that the gearing (12) for the second axle (6) is arranged above the gearing (11) of the first axle and, viewed from above in the direction of the first axle, is partly covering the gearing of the first axle, that the first (3) and second (6) axles are hollow, and that the first (3) and second (6) axles open out into a common space in the frame (2) that forms both a stand part and a housing for the gearings associated with the first and second axles.

2. An industrial robot according to claim 1, wherein the gear wheel (13), which is fixed to the second axle, is arranged externally of and passed through by the second axle (6) and protrudes, viewed from above in the direction of the first axis, in the radial direction essentially up to said first axle (3).

3. An industrial robot according to claim 1 or 2, wherein both of said drive packages are arranged inside said frame (2).

4. An industrial robot according to claim 3, wherein said space in the frame (2) is outwardly sealed by a removable housing (29).

5. An industrial robot according to any of claims 2-4, wherein also the third axle and the lower arm (4) are hollow, and that cables (24) for controlling the movements of the robot extend from the base (1) to the upper arm (8) inside the base, the frame and the lower arm through said three axles in a path that is sealed relative to the exterior.

6. An industrial robot according to claim 5, wherein the lower arm (4) comprises a housing (25) arranged to be removable for accessing the interior of the lower arm.

7. An industrial robot according to any of the preceding claims, wherein it comprises a said drive package with a motor (14) and a multistage gear transmission also for said third axle, and that this third drive package is arranged in a space in the upper arm (8) together with a fourth drive package with a motor and a gearing for rotation of the upper arm relative to the lower arm about a fourth axis that is parallel to the longitudinal extension of the upper arm.

8. An industrial robot according to claim 7, wherein said space in the upper arm is sealed relative to the exterior by a removable housing (28).

9. An industrial robot according to claim 7 or 8, wherein motors for axles arranged at the other end of the upper arm, located opposite to the connection with the lower arm, are arranged in said space in the upper arm (8).

10. An industrial robot according to claim 1, wherein it comprises so-called client cables (27), extending from the interior of the base (1) to the frame (2) through said first axle (3), that is, cables which are specific for the intended use of the robot, such as welding wires, and which do not belong to cables (24) intended for controlling movements of the robot.

11. An industrial robot according to claim 10, wherein it comprises a tube (26), extending inside said first axle (3) in the direction thereof, with a smaller outer diameter than the inner diameter of the axle, and that said client cables (27) are arranged in the tube and the cables (24) intended for controlling the movements of the robot in the space between the tube and the inner wall of the axle to sealingly separate these two types of cables.

12. An industrial robot according to any of the preceding claims, wherein it exhibits, for at least one of said gearings means for eliminating any play in the last stage of the gearing in that said last gear wheel (20), which is secured to the respective axle, and a penultimate gear wheel (19) meshing therewith exhibit wedge-like teeth (21, 22) in the direction of their axes of rotation, and that means (23) are arranged for spring-loaded influence of said penultimate gear wheel in the direction of said axes of rotation to mesh with said last gear wheel.

## Patentansprüche

1. Industrieroboter mit einer festen Basis (1), einem um eine erste Achse mittels einer ersten Welle (3) damit drehbar verbunden Rahmen (2), einem unteren Arm (4), dessen eines Ende um eine zweite Achse mittels einer zweiten Welle (6) drehbar mit dem Rahmen verbunden ist, und einem oberen Arm (8), dessen eines Ende um eine dritte Achse mittels einer dritten Welle mit dem anderen Ende des unteren Armes drehbar verbunden ist, wobei dieser für beide Drehungen um die erste und die zweite Achse eine Antriebseinheit mit einem Motor und einem Getriebe zwischen der Abtriebswelle des Motors und jeweils der ersten und zweiten Welle umfasst, wobei das jeweilige Getriebe (11, 12) ein mehrstufiges Zahnradgetriebe mit parallelen Getrieberadachsen ist, eines der Getrieberäder (20, 13) des jeweiligen Getriebes jeweils an die erste und zweite Welle befestigt ist, und die das Getriebe (12) für die zweite Welle (6) oberhalb des Getriebes (11) der ersten Welle angeordnet ist, und, in der Draufsicht in Richtung der ersten Welle, zum Teil das Getriebe der ersten Welle verdeckt, die erste (3) und zweite (6) Welle hohl sind, und die erste (3) und zweite (6) Welle sich in einen gemeinsamen Raum im Rahmen (2) aufweiten, der sowohl einen Ständerteil und ein Gehäuse für die Getriebe, die mit der ersten und zweiten Welle verbunden sind, bildet.

2. Ein Industrieroboter nach Anspruch 1, wobei das Getrieberad (13), das mit der zweiten Welle verbunden ist, außerhalb der zweiten Welle (6) angeordnet ist und von ihr durchlaufen wird, und in der Draufsicht, in Richtung der ersten Achse, in der radialen Richtung, im Wesentlichen, bis zur ersten Welle (3) hervorsteht.

3. Ein Industrieroboter nach Anspruch 1 oder 2, wobei beide Antriebseinheiten innerhalb des Rahmens (2) angeordnet sind.

4. Ein Industrieroboter nach Anspruch 3, wobei der Raum im Rahmen (2) mittels eines abnehmbaren Gehäuses (29) nach außen hin abgedichtet ist.

5. Ein Industrieroboter nach einem der Ansprüche 2-4, wobei auch die dritte Welle und der untere Arm (4) hohl sind, und die Kabel (24) zur Steuerung der Bewegungen des Roboters sich von der Basis (1) bis zum oberen Arm (8) innerhalb der Basis, dem Rahmen und dem unteren Arm, durch die drei Wellen in einem Weg erstrecken, der nach außen hin abgedichtet ist.

6. Ein Industrieroboter nach Anspruch 5, wobei der untere Arm (4) eine Gehäuse (25) umfasst, das abnehmbar angeordnet ist, um einen Zugang zum Inneren des unteren Armes zu ermöglichen.

7. Ein Industrieroboter nach einem der vorangehenden Ansprüche, wobei dieser eine Antriebseinheit mit einem Motor (14) und einem mehrstufigen Zahnradgetriebe auch für die dritte Welle umfasst, und dass diese dritte Antriebseinheit in einem Raum des oberen Armes (8) angeordnet ist, zusammen mit einer vierten Antriebseinheit mit einem Motor und einem Getriebe zur Rotation des oberen Armes relativ zu dem unteren Arm um eine vierte Achse, die parallel zur Längsdehnung des oberen Armes verläuft.

8. Ein Industrieroboter nach Anspruch 7, wobei der Raum im oberen Arm mittels eines abnehmbaren Gehäuses (28) nach außen abgedichtet ist.

9. Ein Industrieroboter nach Anspruch 7 oder 8, wobei Motoren für die Wellen, die am anderen Ende des oberen Armes angeordnet sind, die sich gegenüber der Verbindungsstelle mit dem unteren Arm befinden, in dem Raum in dem oberen Arm (8) angeordnet sind.

10. Ein Industrieroboter nach Anspruch 1, wobei dieser so genannte Kunden-Kabel (27) umfasst, die sich aus dem Inneren der Basis (1) zum Rahmen (2) durch die erste Welle (3) ausdehnen, das heißt, Kabel, die spezifisch für die beabsichtigte Benutzung des Roboters, wie zum Beispiel Schweißdrähte, und die nicht zu den Kabeln (24) zur Steuerung der Bewegungen des Roboters gehören.

11. Ein Industrieroboter nach Anspruch 10, wobei dieser ein Rohr (26) umfasst, das innerhalb der ersten Welle (3), in deren Richtung verläuft, mit einem kleineren Außendurchmesser als dem Innendurchmesser der Welle, und das die Kunden-Kabel (27) in dem Rohr angeordnet sind, und die Kabel (24) zur Steuerung der Bewegungen des Roboters, im Raum zwischen dem Rohr und der Innenwand der Welle angeordnet sind, um diese beiden Kabelarten dichtend voneinander zu trennen.

12. Ein Industrieroboter nach einem der vorangehenden Ansprüche, wobei dieser für zumindest einem der Getriebe Mittel vorweist, die jegliches Spiel im letzten Abschnitt des Getriebes eliminieren, **dadurch** dass, das letzte Getrieberad (20), das mit der jeweiligen Welle verbunden ist, und ein vorletztes Getrieberad (19), das mit diesem ineinander greift, keilförmige Zähne (21, 22) in Richtung ihrer Drehachsen aufweisen, und dass Mittel (23) zur federbelasteten Einflussnahme des vorletzten Getrieberades in Richtung der Drehachsen angeordnet sind, um in das letzte Getrieberad einzugreifen.

## Revendications

1. Robot industriel comportant une base fixe (1), un châssis (2) connecté à rotation à celle-ci autour d'un premier axe géométrique au moyen d'un premier axe (3), un bras inférieur (4), dont une extrémité est connectée à rotation au châssis autour d'un deuxième axe géométrique au moyen d'un deuxième axe (6), et un bras supérieur (8) dont une extrémité est connectée à rotation à l'autre extrémité du bras inférieur autour d'un troisième axe géométrique au moyen d'un troisième axe, dans lequel il comprend, à la fois pour la rotation autour des premier et deuxième axes géométriques, un ensemble d'entraînement comportant un moteur et un engrenage entre l'arbre de sortie du moteur et les premier et deuxième axes, respectivement, dans lequel l'engrenage respectif (11, 12) est une transmission à engrenages à plusieurs étages ayant des axes de roues dentées parallèles, l'une des roues dentées (20, 13) de l'engrenage respectif est fixée respectivement par rapport aux premier et deuxième axes, et l'engrenage (12) pour le deuxième axe (6) est placé au-dessus de l'engrenage (11) du premier axe et, vu du dessus dans la direction du premier axe, couvre partiellement l'engrenage du premier axe, les premier (3) et deuxième (6) axes sont creux, et les premier (3) et deuxième (6) axes débouchent dans un espace commun dans le châssis (2) qui forme à la fois une partie de pied et un logement pour les engrenages associés aux premier et deuxième axes.

2. Robot industriel selon la revendication 1, dans lequel la roue dentée (13), qui est fixée au deuxième axe, est disposée à l'extérieur de et traversée par le deuxième axe (6) et fait saillie, vue du dessus dans la direction du premier axe, dans la direction radiale en montant essentiellement jusqu'audit premier axe (3).

3. Robot industriel selon la revendication 1 ou 2, dans lequel les deux ensembles d'entraînement sont placés à l'intérieur dudit châssis (2).

4. Robot industriel selon la revendication 3, dans lequel ledit espace dans le châssis (2) est fermé hermétiquement vers l'extérieur par un boîtier amovible (29).

5. Robot industriel selon l'une quelconque des revendications 2 à 4, dans lequel le troisième axe et le bras inférieur (4) aussi sont creux, et des câbles (24) pour commander les mouvements du robot s'étendent de la base (1) au bras supérieur (8) à l'intérieur de la base, du châssis et du bras inférieur à travers lesdits trois axes dans un chemin qui est hermétique par rapport à l'extérieur.

6. Robot industriel selon la revendication 5, dans lequel le bras inférieur (4) comprend un boîtier (25) adapté pour être amovible pour permettre l'accès à l'intérieur du bras inférieur.

7. Robot industriel selon l'une quelconque des revendications précédentes, dans lequel il comprend un dit ensemble d'entraînement avec un moteur (14) et une transmission à engrenages à plusieurs étages aussi pour ledit troisième axe, et ce troisième ensemble d'entraînement est placé dans un espace prévu dans le bras supérieur (8) en même temps qu'un quatrième ensemble d'entraînement avec un moteur et un engrenage pour la rotation du bras supérieur par rapport au bras inférieur autour d'un quatrième axe géométrique qui est parallèle à l'extension longitudinale du bras supérieur.

8. Robot industriel selon la revendication 7, dans lequel ledit espace dans le bras supérieur est rendu hermétique par rapport à l'extérieur par un boîtier amovible (28).

9. Robot industriel selon la revendication 7 ou 8, dans lequel des moteurs pour des axes placés à l'autre extrémité du bras supérieur, située à l'opposé de la connexion avec le bras inférieur, sont placés dans ledit espace présent dans le bras supérieur (8).

10. Robot industriel selon la revendication 1, dans lequel il comprend des câbles appelés câbles client (27), s'étendant de l'intérieur de la base (1) au châssis (2) à travers ledit premier axe (3), à savoir des câbles qui sont spécifiques pour l'utilisation voulue du robot, comme des fils de soudure, et qui ne font pas partie des câbles (24) destinés à commander les mouvements du robot.

11. Robot industriel selon la revendication 10, dans lequel il comprend un tube (26) s'étendant à l'intérieur dudit premier axe (3) dans la direction de ce dernier, avec un diamètre extérieur plus petit que le diamètre intérieur de l'axe, et lesdits câbles client (27) sont placés dans le tube et les câbles (24) destinés à commander les mouvements du robot dans l'espace situé entre le tube et la paroi intérieur de l'axe pour séparer de façon hermétique ces deux types de câbles.

12. Robot industriel selon l'une quelconque des revendications précédentes, dans lequel il présente, pour au moins l'un desdits engrenages, un moyen pour éliminer tout jeu du dernier étage de l'engrenage, dans lequel ladite dernière roue dentée (20), qui est fixée à l'axe respectif, et une avant-dernière roue dentée (19) se mettant en prise avec celle-ci, présentent des dents en coins (21, 22) dans la direction de leurs axes de rotation, et dans lequel un moyen (23) est placé pour exercer une influence à ressort de ladite avant-dernière roue dentée dans la direction desdits axes de rotation pour qu'elle se mette en prise avec ladite dernière roue dentée.
